# EUROPEAN PATENT APPLICATION

(11) **EP 4 603 259 A1**
(43) Date of publication of application: **20.08.2025**
(21) Application number: 24875622.3
(22) Date of filing: 06.08.2024
(51) Int. Cl.: B29C 65/00, B29C 65/02, H01M 50/105, H01M 50/183

(54) **BATTERY CELL SEALING DEVICE COMPRISING GAP MEASUREMENT UNIT**

(30) Priority: 22.12.2023 KR 20230189610
(71) Applicant: LG Energy Solution Ltd., 07335 Seoul (KR)
(72) Inventor: The designation of the inventor has not yet been filed
(74) Representative: Goddar, Heinz J.
(86) International application number: PCT/KR2024/011550
(87) International publication number: WO 2025/135375

(57) **Abstract**

Disclosed is a battery cell sealing apparatus including a distance measurement unit, and more particularly a battery cell sealing apparatus including a sealing unit configured to seal a battery cell, the sealing unit including an upper sealing unit and a lower sealing unit, a movement unit configured to adjust the distance between the upper sealing unit and the lower sealing unit, a distance measurement unit configured to measure the distance between the upper sealing unit and the lower sealing unit, and a movement guide unit configured to move the distance measurement unit.

## Description

### [Technical Field]

This application claims the benefit of priority to Korean Patent Application No. 2023-0189610 filed on December 22, 2023, the disclosure of which is incorporated herein by reference in its entirety.

The present invention relates to a battery cell sealing apparatus including a distance measurement unit. More specifically, the present invention relates to a battery cell sealing apparatus including a distance measurement unit capable of measuring the position misalignment of a sealing unit and correcting the position of the sealing unit in a process of sealing a battery cell using the sealing unit.

### [Background Art]

Depending on the shape of a battery case, secondary batteries are classified into a cylindrical battery having an electrode assembly received in a cylindrical metal can, a prismatic battery having an electrode assembly received in a prismatic metal can, and a pouch-shaped battery having an electrode assembly received in a pouch-shaped case made of an aluminum laminate sheet.

For the pouch-shaped battery, the edge of the pouch-shaped case is sealed in the state in which the electrode assembly is received in the pouch-shaped case together with an electrolyte, whereby the electrode assembly and the electrolyte are protected from the outside while preventing leakage of the electrolyte. A battery cell sealing apparatus according to the present invention is used to seal the edge of the pouch-shaped battery.

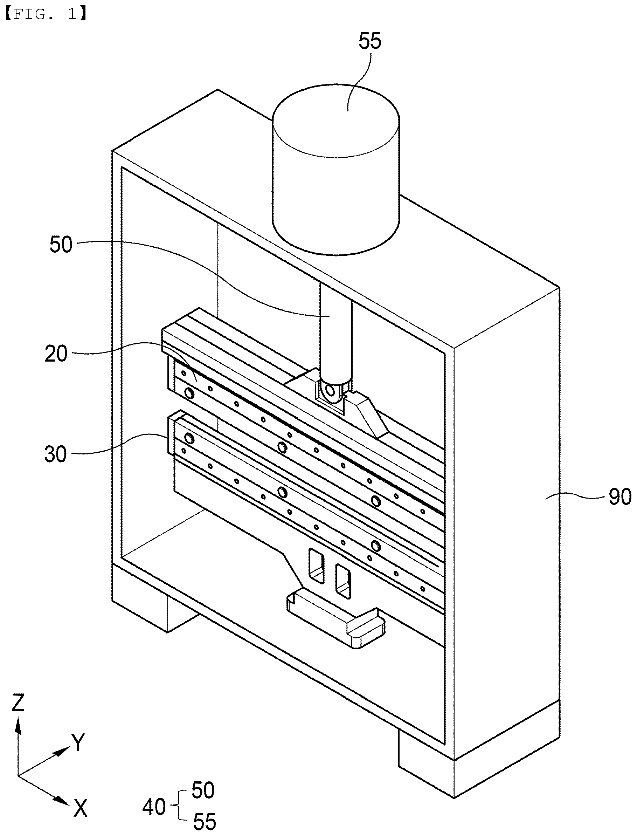

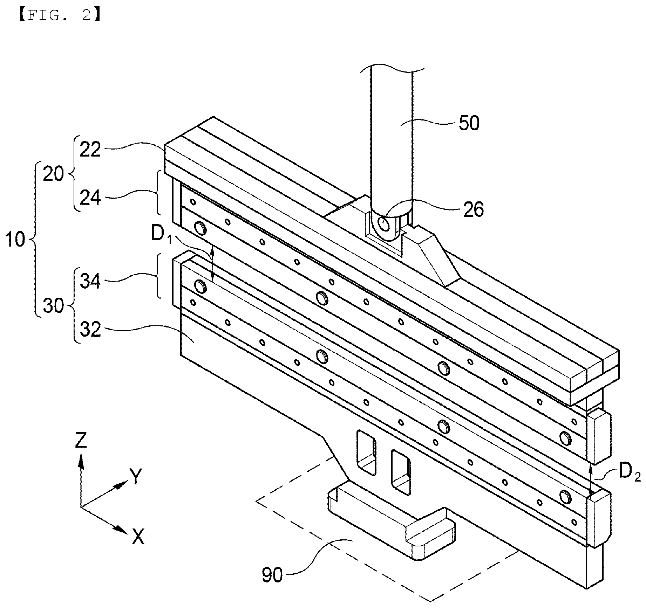

FIG. 1 is a perspective view schematically showing only the main parts of a conventional battery cell sealing apparatus, and FIG. 2 is a perspective view showing a conventional sealing unit.

As shown in FIGs. 1 and 2, the conventional battery cell sealing apparatus includes a sealing unit 10 configured to seal the edge of a battery cell, a movement unit 40 configured to move the sealing unit 10, and a frame 90 connected to the sealing unit 10 and the movement unit 40 to support the same.

In the conventional battery cell sealing apparatus, the sealing unit 10 includes an upper sealing unit 20 and a lower sealing unit 30. The upper sealing unit 20 includes an upper fixing portion 22 that serves as a frame as a whole and an upper sealing bar 24 connected to the upper fixing portion 22 to press and heat from an upper part of surfaces to be sealed. The lower sealing unit 30 includes a lower fixing portion 32 that serves as a frame as a whole and a lower sealing bar 34 connected to the lower fixing portion 32 to press and heat from a lower part of the surfaces to be sealed.

The movement unit 40 includes a movement shaft 50 connected to the upper sealing unit 20 to move the upper sealing unit and a driving motor 55 configured to drive the movement shaft 50.

The conventional battery cell sealing apparatus repeatedly seals battery cells. After a certain period of use, when the upper sealing unit 20 and the lower sealing unit 30 come into contact with each other, the distances D1 and D2 therebetween may differ from initial setting values, or an eccentricity phenomenon in which the distances therebetween on one side and the other side are different from each other may occur.

A position misalignment phenomenon due to the difference from the initial setting values or the eccentricity may lead to poor sealing, and secondary damage such as electrolyte leakage due to poor sealing may occur.

The distance between the upper sealing bar 24 and the lower sealing bar 34 is generally 150 µm to 300 µm, which is very small, and errors may occur due to the tolerance or gap of the movement unit 40 that moves the upper sealing bar 24 upward and downward or may occur due to wear of the sealing bar due to continuous use and temperature changes caused by the operation of the apparatus.

Conventionally, these problems were recognized, but in order to solve the problems, the sealing apparatus was temporarily stopped, the upper sealing bar 24 and the lower sealing bar 34 were moved to an actual sealing position in the absence of a pouch-shaped battery, the distance between the upper sealing bar 24 and the lower sealing bar 34 was measured using a gap gauge, and the measured error was corrected by adjusting a screw provided at the upper sealing unit 20, the lower sealing unit 30, or the movement unit 40. The gap gauge, which is provided in the form of a bundle of multiple gap gauge parts, is commonly used.

Conventionally, the error is manually measured and compensated, which is time-consuming depending on accuracy and correction.

Patent Document 1 discloses a sealing apparatus that provides a constant sealing position by measuring the movement variation of a battery case fixing portion using a laser range finder during sealing; however, a member capable of measuring the position misalignment of a sealing block configured to perform sealing is not provided.

### (Prior Art Document)

(Patent Document 1) Korean Patent Application Publication No. 2022-0076795

### [Disclosure]

### [Technical Problem]

The present invention has been made in view of the above problems, and it is an object of the present invention to provide a battery cell sealing apparatus capable of measuring an error in the distance between an upper sealing unit and a lower sealing unit and eccentricity thereof and automatically correcting the error and the eccentricity.

### [Technical Solution]

A battery cell sealing apparatus according to the present invention to accomplish the above object includes a sealing unit (100) configured to seal a battery cell, the sealing unit including an upper sealing unit (200) and a lower sealing unit (300), a movement unit (400) configured to adjust the distance between the upper sealing unit (200) and the lower sealing unit (300), a distance measurement unit (700) configured to measure the distance between the upper sealing unit (200) and the lower sealing unit (300), and a movement guide unit (800) configured to move the distance measurement unit (700).

In the battery cell sealing apparatus according to the present invention, the upper sealing unit (200) may include an upper fixing portion (220) configured to serve as a frame as a whole and an upper sealing bar (240) connected to the upper fixing portion (220), the lower sealing unit (300) may include a lower fixing portion (320) configured to serve as a frame as a whole and a lower sealing bar (340) connected to the lower fixing portion (320), the movement unit (400) may be substantially configured to adjust the distance between the upper sealing bar (240) and the lower sealing bar (340), and the distance measurement unit (700) may be substantially configured to adjust the distances (D3 and D4) between the upper sealing bar and the lower sealing bar.

In the battery cell sealing apparatus according to the present invention, the movement unit (400A) may include two movement shafts (500A and 500B) connected to the top of the upper sealing unit near opposite edges of the upper sealing unit (200) in a longitudinal direction, respectively, and servomotors (550A and 550B) configured to control the positions of the two movement shafts (500A and 500B), respectively.

In the battery cell sealing apparatus according to the present invention, the movement unit (400B or 400C) may include a movement shaft (500C) connected to the center of the upper fixing portion (220), a driving motor (550) configured to move the movement shaft (500C) upward and downward, and servomotors (550C and 550D or 550E, 550F, 550G, and 550H) configured to adjust the connection distances (d1 or d2 and d3) between ends of the upper fixing portion (220) and the upper sealing bar (240) at opposite sides thereof in the longitudinal direction (X-axis direction).

In the battery cell sealing apparatus according to the present invention, the servomotors (550C and 550D) may be configured to adjust the distance d1 between a middle of the upper fixing portion (220) and a middle of the upper sealing bar (240) in a width direction (Y-axis direction) at the ends of the upper fixing portion and the upper sealing bar at the opposite sides thereof in the longitudinal direction (X-axis direction).

In the battery cell sealing apparatus according to the present invention, the servomotors (550E, 550F, 550G, and 550H) may be configured to adjust the distances (d2 and d3) between opposite sides of the upper fixing portion (220) and the upper sealing bar (240) in the width direction (Y-axis direction) at the ends of the upper fixing portion 220 and the upper sealing bar 240 at the opposite sides thereof in the longitudinal direction (X-axis direction).

In the battery cell sealing apparatus according to the present invention, the distance measurement unit (700) and the movement guide unit (800) may be disposed at both the front and the rear of the sealing unit.

In the battery cell sealing apparatus according to the present invention, the movement guide unit (800) may include a first movement guide unit (810) formed in a direction perpendicular to the longitudinal direction of the sealing unit (100) and a second movement guide unit (820) formed in a direction parallel to the longitudinal direction of the sealing unit (100).

In the battery cell sealing apparatus according to the present invention, the distance measurement unit (700) may be fixed to the first movement guide unit (810) or the second movement guide unit (820), and the first movement guide unit or second movement guide unit having the distance measurement unit (700) fixed thereto may be fixed to the first movement guide unit or second movement guide unit having no distance measurement unit (700) fixed thereto.

In the battery cell sealing apparatus according to the present invention, the movement unit (400) may be connected to a controller configured to perform a control according to the result of a measurement of the distance measurement unit (700).

A battery cell sealing method using the battery cell sealing apparatus according to the present invention includes a first step comprising changing the distance between the upper sealing unit and the lower sealing unit from the state in which a battery cell is not present to the state in which the battery cell is sealed; a second step comprising locating the distance measurement unit at a position adjacent to the sealing unit through the movement guide unit; a third step comprising measuring the distance between the upper sealing unit and the lower sealing unit through the distance measurement unit; and a fourth step comprising sealing the battery cell by reflecting the result of measurement of the distance between the upper sealing unit and the lower sealing unit for control of the movement unit.

In the battery cell sealing method according to the present invention, the first step and the second step may be performed in reverse order or may be performed simultaneously.

The battery cell sealing method according to the present invention, may further include a step of moving the distance measurement unit so the distance measurement unit is spaced apart from the sealing unit between the third step and the fourth step.

In addition, the present invention may provide various combinations of the above solving means.

### [Advantageous Effects]

The present invention has an advantage in that a distance measurement unit configured to measure the position-specific distance between an upper sealing unit and a lower sealing unit is provided, whereby, when a difference in the position-specific distance between the upper sealing unit and the lower sealing unit occurs, the position of the upper sealing unit and the lower sealing unit may be adjusted using a servomotor, whereby it is possible to prevent poor sealing caused by the difference in position-specific distance between the upper sealing unit and the lower sealing unit.

### [Description of Drawings]

FIG. 1 is a perspective view schematically showing only the main parts of a conventional battery cell sealing apparatus.
FIG. 2 is a perspective view showing a conventional sealing unit.
FIG. 3 is a perspective view showing a battery cell sealing apparatus according to a first embodiment of the present invention.
FIG. 4 is a perspective view showing a sealing unit according to a first embodiment of the present invention.
FIG. 5 is a perspective view showing a battery cell sealing apparatus according to a second embodiment of the present invention.
FIG. 6 is a perspective view showing a sealing unit according to a second embodiment of the present invention.
FIG. 7 is an enlarged view of the sealing unit according to the second embodiment of the present invention.
FIG. 8 is a perspective view showing a sealing unit according to a third embodiment of the present invention.
FIG. 9 is an enlarged view of the sealing unit according to the third embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

In the description of the invention of the present application and claims, a longitudinal direction refers to an X-axis direction, a width direction refers to a Y-axis direction, and a height direction refers to a Z-axis direction.

Hereinafter, a battery cell sealing apparatus including a distance measurement unit according to the present invention will be described in detail with reference to the accompanying drawings.

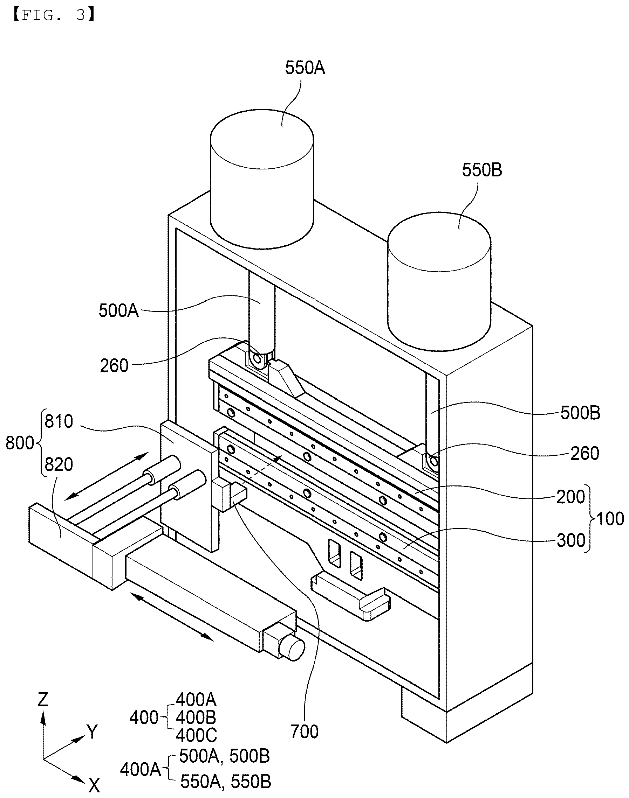

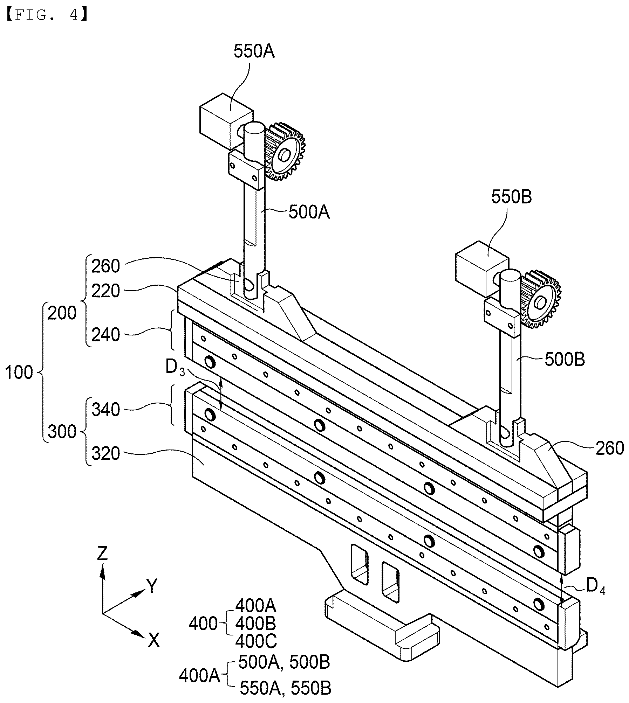

FIG. 3 is a perspective view showing a battery cell sealing apparatus according to a first embodiment of the present invention, and FIG. 4 is a perspective view showing a sealing unit according to a first embodiment of the present invention.

Referring to FIGs. 3 and 4, the battery cell sealing apparatus according to the first embodiment of the present invention includes a sealing unit 100, a movement unit 400, a distance measurement unit 700, and a movement guide unit 800.

The sealing unit 100 is configured to seal the edge of a pouch-shaped battery cell, includes an upper sealing unit 200 and a lower sealing unit 300 located so as to face each other, and is similar to the conventional sealing unit.

The upper sealing unit 200 includes an upper fixing portion 220 that serves as a frame as a whole, an upper sealing bar 240 connected to the upper fixing portion 220 so as to face an upper one of surfaces to be sealed, and an upper fixing recess 260 connected to the movement unit 400.

The upper fixing portion 220 allows the upper sealing bar 240 and the movement unit 400 to be connected to each other such that the upper sealing unit 200 can be moved by the movement unit 400, and more specifically, the movement unit 400 is fixed to the upper fixing recess 260 located at an upper surface of the upper fixing portion 220.

The upper sealing bar 240 directly presses and heats a surface of the battery cell to be sealed for sealing, and may be in the form of a metal bar with one flat surface extending in the longitudinal direction (X-axis direction). The upper sealing bar 240 may have a built-in temperature control portion (not shown) configured to generate heat in order to apply heat to the surface to be sealed.

The upper sealing bar 240 heated by the temperature control portion (not shown) may be heated to a general sealing temperature of 170 to 180°C.

The upper fixing recess 260 is a coupling member provided at an upper surface of the upper fixing portion 220 to allow the upper fixing portion 220 and the movement unit 400 to be connected to each other therethrough, is not particularly restricted as long as the upper fixing portion 220 and the movement unit 400 can be fixed to each other, and may be configured as a bolt screw coupling structure.

Here, the upper sealing bar 240 may not be directly connected to the upper fixing portion 220 but may first be fixed to an upper sealing bar support portion (not shown), and then the upper sealing bar support portion may be fixed to the upper fixing portion 220.

The lower sealing unit 300 includes a lower fixing portion 320 that serves as a frame as a whole and a lower sealing bar 340 connected to the lower fixing portion 320 so as to face the upper one of the surfaces to be sealed.

The lower fixing portion 320 is connected to the lower sealing bar 340 to support the lower sealing bar 340 such that the lower sealing bar can be fixed at a predetermined position.

The lower sealing bar 340 directly presses and heats a surface of the battery cell to be sealed for sealing, and may be in the form of a metal bar with one flat surface extending in the longitudinal direction (x-axis direction). The lower sealing bar 340 may have a built-in temperature control portion (not shown) configured to generate heat in order to apply heat to the surface to be sealed.

The lower sealing bar 340 heated by the temperature control portion (not shown) may be heated to a general sealing temperature of 170°C to 180°C.

Here, the lower sealing bar 340 may not be directly connected to the lower fixing portion 320 but may first be fixed to a lower sealing bar support portion (not shown), and then the upper sealing bar support portion may be fixed to the lower fixing portion 320.

In this case, the temperature control portion (not shown) may be provided in one of the upper sealing bar 240 and the lower sealing bar 340, but more preferably is provided in each of the upper sealing bar 240 and the lower sealing bar 340.

Additionally, a temperature control portion may be further provided in at least one of the upper fixing portion 220 and the lower fixing portion 320, as needed.

The surfaces of the upper sealing bar 240 and the lower sealing bar 340 that face each other are horizontal surfaces, when the surfaces of the upper sealing bar 240 and the lower sealing bar 340 that face each other approach each other in a heated state, a laminated sheet of the pouch-shaped battery cell located therebetween is sealed, and sealing is generally accomplished by fusing a PP adhesive layer of the laminated sheet.

In order to achieve proper sealing, the temperature of the upper sealing bar 240 and the lower sealing bar 340 and the contact time with the surfaces to be sealed must be adjusted in advance. In addition, the distance between the upper sealing bar 240 and the lower sealing bar 340 is important. If the distance is greater than a reference value when the sealing process is performed at appropriate temperature and for appropriate time, sufficient sealing may not be achieved, and if the distance is less than the reference value, excessive sealing may occur, whereby the laminate sheet may be damaged.

The sealing process is successively performed a plurality of times in the state in which the temperature, the contact time, and the distance between the upper sealing bar 240 and the lower sealing bar 340 are set in advance. Generally, the lower sealing unit 300 including the lower sealing bar 340 is fixed, and the upper sealing bar 240 is moved in the height direction (Z-axis direction). The lower sealing unit 300 is fixed to a frame 900.

Conventionally, as shown in FIGs. 1 and 2, the movement unit 40 moves the upper sealing unit 20 to an initial setting position using the movement shaft 50 driven by the driving motor 55, and an error in the distance between the upper sealing unit 20 and the lower sealing unit 30 and eccentricity of the upper sealing unit and the lower sealing unit may occur as a result of wear due to repeated sealing processes and damage due to temperature changes, etc. Generally, the distance between the upper sealing bar 24 and the lower sealing bar 34 is 150 µm to 300 µm.

A movement unit 400A is configured to move the upper sealing unit 200, and includes two movement shafts 500A and 500B connected to the upper sealing unit 200 near opposite edges of the upper sealing unit in the longitudinal direction (X-axis direction), respectively, and servomotors 550A and 550B configured to control the positions of the two movement shafts 500A and 500B, respectively. The servomotors 550A and 550B are fixed to the frame 900.

Each of the two movement shafts 500A and 500B may be formed in a shape that engages with a toothed member connected to a corresponding one of the servomotors 550A and 550B, and the two movement shafts are provided on opposite sides of the upper sealing unit 200, respectively, whereby eccentricity of the upper sealing unit 200 in the longitudinal direction (X-axis direction) may be adjusted even if the eccentricity occurs.

In the figures, each of the two movement shafts 500A and 500B is formed in a shape that engages with a toothed member, but is not particularly restricted as long as each of the movement shafts has a structure capable of adjusting eccentricity having different heights of the upper sealing unit 200 in the longitudinal direction (X-axis direction), and an endless track or a hydraulic pump driven by the servomotors 550A and 550B may be used.

The servomotors 550A and 550B may change the heights of the two movement shafts 500A and 500B, and are not particularly restricted as long as the length of each of the servomotors is controlled.

The distance measurement unit 700 is a unit configured to measure the distance between the upper sealing bar 240 and the lower sealing bar 340, and may be a laser measurement unit that radiates a laser or a vision camera that captures images of the upper sealing bar 240 and the lower sealing bar 340 for measurement.

The distance measurement unit 700 is not particularly restricted as long as the distance measurement unit is a member capable of measuring the distance between the upper sealing bar 240 and the lower sealing bar 340, in addition to the laser measurement unit and the vision camera.

The distance measurement unit 700 may transmit measured data to a controller (not shown), and the controller (not shown) calculates the distance based on the received information and transmits whether to adjust the position of the upper sealing unit 200 through the movement shafts 500A and 500B to the servomotors 550A and 550B.

The movement guide unit 800 is configured to move the distance measurement unit 700 to a specified position, and includes a first movement guide unit 810 and a second movement guide unit 820.

The distance measurement unit 700 is connected to one side of the first movement guide unit 810, which moves the distance measurement unit 700 in the width direction (Y-axis direction), which is perpendicular to the longitudinal direction of the sealing units 200 and 300.

The distance between the distance measurement unit 700 and the sealing units 200 and 300 may be adjusted by the first movement guide unit 810. When measuring the distance between the upper sealing bar 240 and the lower sealing bar 340, the distance measurement unit is moved in a direction toward the sealing units 200 and 300 for measurement, and when not measuring the distance, the distance measurement unit is located so as to be spaced apart from the sealing units 200 and 300. The reason for this is that it is necessary to prevent the distance measurement unit 700 from being damaged by heat generated from the sealing units 200 and 300.

The second movement guide unit 820 moves the first movement guide unit 810, to which the distance measurement unit 700 is connected, in a direction parallel to the longitudinal direction of the sealing units 200 and 300 (X-axis direction).

The distance measurement unit 700 may be moved in the longitudinal direction (X-axis direction) by the second movement guide unit 820, whereby the position-specific distance between the upper sealing bar 240 and the lower sealing bar 340 may be measured in more detail.

The frame 900 is configured to support and fix members of the sealing apparatus at specific positions, and the servomotors 550A and 550B that drive the movement unit 400 are located on an upper part of the frame while the lower sealing unit 300 is connected and fixed to a lower part of the frame.

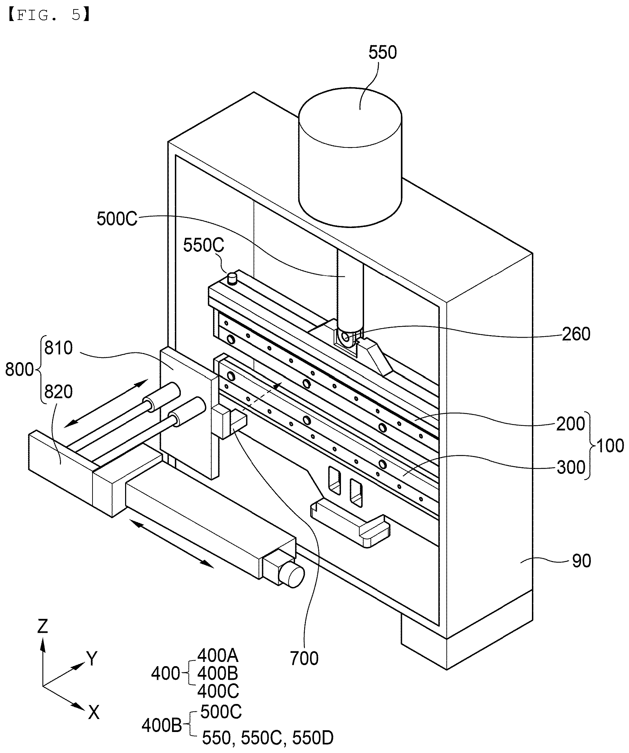

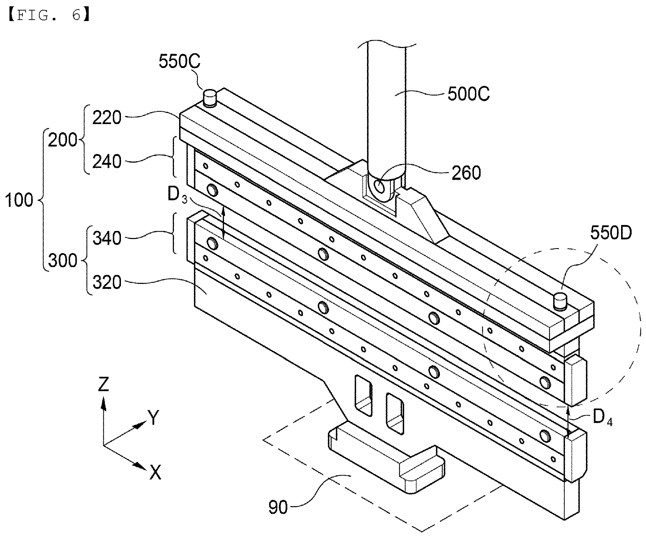

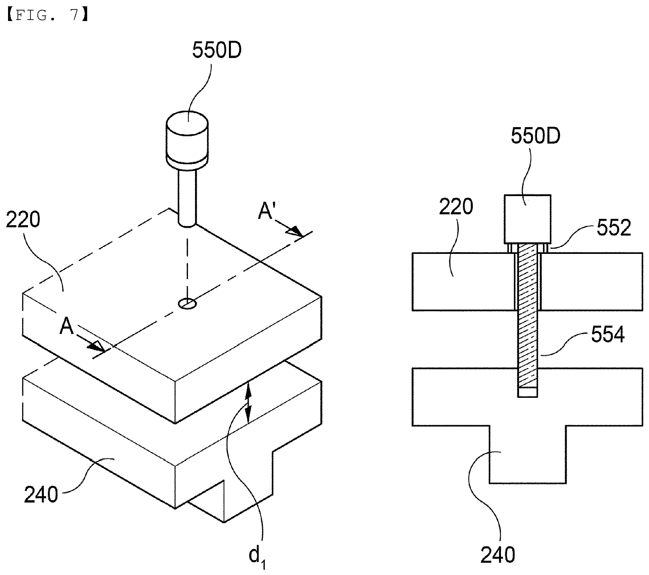

FIG. 5 is a perspective view showing a battery cell sealing apparatus according to a second embodiment of the present invention, FIG. 6 is a perspective view showing a sealing unit according to a second embodiment of the present invention, and FIG. 7 is an enlarged view of the sealing unit according to the second embodiment of the present invention.

Referring to FIGs. 5 to 7, the battery cell sealing apparatus according to the second embodiment of the present invention is identical to the battery cell sealing apparatus according to the first embodiment described with reference to FIGs. 3 and 4, except for a movement unit 400B, and therefore a description of the same configuration will be omitted.

In the battery cell sealing apparatus according to the second embodiment, the movement unit 400B includes a movement shaft 500C connected to an upper fixing portion 220, a driving motor 550 configured to move the movement shaft 500C upward and downward, and servomotors 550C and 550D located on opposite edges of the upper fixing portion 220.

The movement shaft 500C is configured to move an upper sealing unit 200 in a vertical direction, and the movement shaft 500C may be driven by a driving motor 550 provided on the movement shaft 500C. More specifically, the movement shaft 500C may be connected to an upper fixing recess 260 formed in an upper surface of the upper fixing portion 220. The movement shaft 500C and the driving motor 550 are identical to those of a conventional battery cell sealing apparatus.

The servomotors 550C and 550D are located at opposite edges of the upper sealing unit 200 in the longitudinal direction (X-axis direction) and are located and fixed on the upper fixing portion 220 by support shafts 552, and a screw member 554 is connected to a driving part of each of the servomotors 550C and 550D, wherein a part of the screw member is inserted into an upper sealing bar 240 through the upper fixing portion 220.

Here, the screw member 554 is spaced apart from the upper fixing portion 220 by a predetermined distance so as not to abut the upper fixing portion 220 while extending through the upper fixing portion.

The screw members connected to the servomotors 550C and 550D are rotated by driving of the servomotors 550C and 550D to adjust the distance d1 between the upper fixing portion 220 and the upper sealing bar 240 as needed, and the upper fixing portion 220 and the upper sealing bar 240 may be located spaced apart from each other by a predetermined distance in normal times.

The distance d1 between the upper fixing portion 220 and the upper sealing bar 240 at opposite edges is adjusted by adjusting the number of revolutions and the direction of rotation of the screw members using the servomotors 550C and 550D. FIG. 7 is an enlarged view showing the upper fixing portion 220 and the upper sealing bar 240 on one side, but the same configuration is also provided on the other side.

The adjustment of the distance through the screw members using the servomotors 550C and 550D is one non-limiting example, and any means configured to finely adjust the distance between the upper fixing portion 220 and the upper sealing bar 240 may be used.

There is an advantage in that the movement shaft 500C controls movement in large increments and the servomotors 550C and 550D located on opposite edges of the upper fixing portion 220 control movement in small increments, whereby it is possible to more precisely adjust the distance between the upper sealing bar 240 and the lower sealing bar 340.

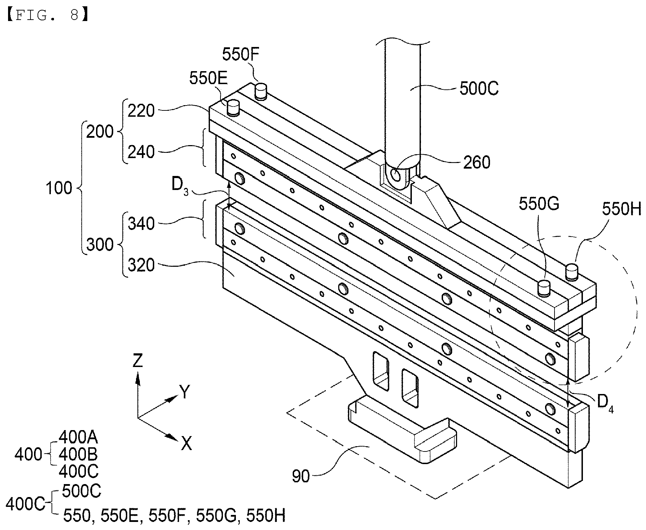

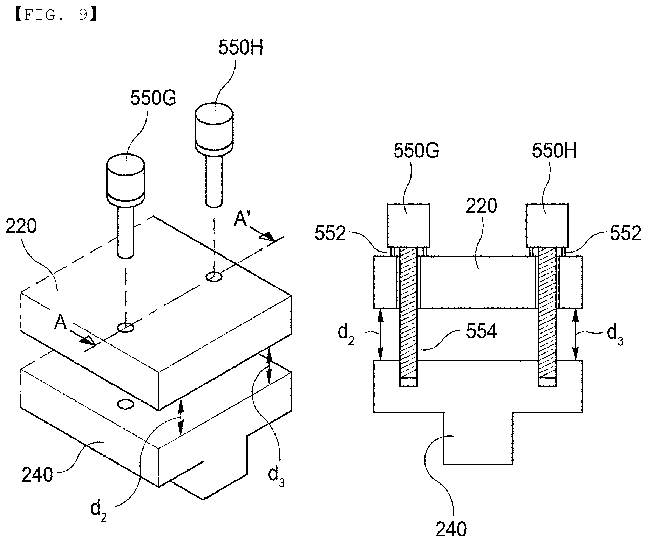

FIG. 8 is a perspective view showing a sealing unit according to a third embodiment of the present invention, and FIG. 9 is an enlarged view of the sealing unit according to the third embodiment of the present invention.

Referring to FIGs. 8 and 9, the battery cell sealing apparatus according to the third embodiment of the present invention is identical to the battery cell sealing apparatus according to the second embodiment, except for disposition of servomotors, and therefore a description of the same configuration will be omitted.

In the battery cell sealing apparatus according to the third embodiment, a movement unit 400C includes a movement shaft 500C connected to an upper fixing portion 220 and servomotors 550E, 550F, 550G, and 550H located on opposite edges of the upper fixing portion 220.

The servomotors 550E, 550F, 550G, and 550H include two servomotors 550E and 550F provided on one edge of the upper fixing portion 220 in the width direction (Y-axis direction) and two servomotors 550G and 550H provided on the other edge of the upper fixing portion 220 in the width direction (Y-axis direction), and therefore four servomotors 550E, 550F, 500G, and 500H are provided.

A screw member 554 is connected to a driving part of each of the servomotors 550E, 550F, 500G, and 500H, wherein a part of the screw member is inserted into an upper sealing bar 240 through the upper fixing portion 220.

Here, the screw member is spaced apart from the upper fixing portion 220 by a predetermined distance so as not to abut the upper fixing portion 220 while extending through the upper fixing portion.

The screw members connected to the servomotors 550E, 550F, 500G, and 500H are rotated by driving of the servomotors 550E, 550F, 500G, and 500H to adjust the distances d2 and d3 between the upper fixing portion 220 and the upper sealing bar 240 as needed, and the upper fixing portion 220 and the upper sealing bar 240 may be located spaced apart from each other by a predetermined distance in normal times.

The distances d2 and d3 between the upper fixing portion 220 and the upper sealing bar 240 at opposite edges are adjusted by adjusting the number of revolutions and the direction of rotation of the screw members 554 using the servomotors 550E, 550F, 500G, and 500H.

FIG. 9 is an enlarged view showing the upper fixing portion 220 and the upper sealing bar 240 on one side, but the same configuration is also provided on the other side.

There is an advantage in that, since the servomotors 550E, 550F, 500G, and 500H are provided on opposite edges of the upper fixing portion 220 and two of the servomotors 550E, 550F, 500G, and 500H are provided on each of the opposite edges in the width direction (Y-axis direction), the eccentricity of the upper sealing unit 200 in the longitudinal direction (X-axis direction) and the eccentricity of the upper sealing unit in the width direction (Y-axis direction) may be adjusted so as to be within a normal range.

In this case, a distance measurement unit 700 and a movement guide unit 800 may be disposed at both the front and rear of a sealing unit 100 to measure the distance at the front and rear.

The adjustment of the distance through the screw members using the servomotors 550E, 550F, 500G, and 500H is one non-limiting example, and any means configured to finely adjust the distance between the upper fixing portion 220 and the upper sealing bar 240 may be used.

There is an advantage in that the movement shaft 500C controls movement in large increments and the servomotors 550E, 550F, 500G, and 500H located on opposite edges of the upper fixing portion 220 control movement in small increments, whereby it is possible to more precisely adjust the distance between the upper sealing bar 240 and the lower sealing bar 340.

The servomotors 550E, 550F, 500G, and 500H are located and fixed on the upper fixing portion 220 by support shafts 552 to adjust the distances d2 and d3 between the upper fixing portion 220 and the upper sealing bar 240 through the screw members.

A battery cell sealing method using the battery cell sealing apparatus according to the present invention includes a first step of changing the distance between the upper sealing unit 200 and the lower sealing unit 300 from the state in which a battery cell is not present to the state in which the battery cell is sealed, a second step of locating the distance measurement unit 700 at a position adjacent to the sealing unit 100 through the movement guide unit 400, a third step of measuring the distance between the upper sealing unit 200 and the lower sealing unit 300 through the distance measurement unit 700, and a fourth step of sealing the battery cell by reflecting the result of measurement of the distance between the upper sealing unit 200 and the lower sealing unit 300 for control of the movement unit 400.

First, the first step of changing the distance between the upper sealing unit 200 and the lower sealing unit 300 to the state in which the battery cell is sealed is a step in which the upper sealing unit 200 is moved downward to the position in which the battery cell is sealed by the movement shafts 500A, 500B, and 500C.

The second step of locating the distance measurement unit 700 at a position adjacent to the sealing unit 100 through the movement guide unit 400 is a step of moving the distance measurement unit 700 connected to the first movement guide unit 810 to a position adjacent to the sealing unit 100 through the first movement guide unit 810 and locating the first movement guide unit 810 and the distance measurement unit 700 on one side of the sealing unit 100 so as to face the sealing unit through the second movement guide unit 820.

Here, the first step and the second step may be performed in reverse order or may be performed simultaneously.

The third step of measuring the distance between the upper sealing unit 200 and the lower sealing unit 300 through the distance measurement unit 700 is a step of measuring the distance between the upper sealing unit 200 and the lower sealing unit 300 through the distance measurement unit 700, wherein the distance between the upper sealing unit 200 and the lower sealing unit 300 is measured while moving the distance measurement unit 700 from one side to the other side of the sealing unit 100 by the second movement guide unit 820.

A step of moving the distance measurement unit 700 so as to be spaced apart from the sealing unit 100 is further included between the third and fourth steps because the distance measurement unit 700 may be damaged by heat generated from the sealing unit 100 if the distance measurement unit 700 is continuously located adjacent to the sealing unit 100.

In the fourth step of sealing the battery cell by reflecting the result of measurement of the distance between the upper sealing unit 200 and the lower sealing unit 300 for control of the movement unit 400, the result of measurement of the distance between the upper sealing unit 200 and the lower sealing unit 300 measured by the distance measurement unit 700 is transmitted to the controller, and the controller determines whether to adjust the position of the upper sealing unit 200 and calculates the distance for position adjustment based on the received result and transmits the same to the movement unit 400.

If, as a result of determination by the controller, the upper sealing unit 200 has a distance error or eccentricity and requires position adjustment, the movement unit 400 receives a driving signal from the controller and adjusts the position of the upper sealing unit 200 to move the position of the eccentric upper sealing unit 200 so as to be within a normal range.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10, 100: Sealing units
20, 200: Upper sealing units
22, 220: Upper fixing portions
24, 240: Upper sealing bars
26, 260: Upper fixing recesses
30, 300: Lower sealing units
32, 320: Lower fixing portions
34, 340: Lower sealing bars
40, 400, 400A, 400B, 400C: Movement units
50, 500A, 500B, 500C: Movement shafts
55, 550: Driving motors
550A, 550B, 550C, 550D, 550E, 550F, 550G, 550H: Servomotors
552: Support shaft
554: Screw member
700: Distance measurement unit
800: Movement guide unit
810: First movement guide unit
820: Second movement guide unit
90, 900: Frames
D1, D2, D3, D4: Distances between upper sealing unit and lower sealing unit
d1, d2, d3: Distances between upper fixing portion and upper sealing bar

## Claims

1. A battery cell sealing apparatus comprising:
a sealing unit configured to seal a battery cell, the sealing unit comprising an upper sealing unit and a lower sealing unit;
a movement unit configured to adjust a distance between the upper sealing unit and the lower sealing unit;
a distance measurement unit configured to measure the distance between the upper sealing unit and the lower sealing unit; and
a movement guide unit configured to move the distance measurement unit.

2. The battery cell sealing apparatus according to claim 1, wherein
the upper sealing unit comprises an upper fixing portion configured to serve as a frame as a whole and an upper sealing bar connected to the upper fixing portion,
the lower sealing unit comprises a lower fixing portion configured to serve as a frame as a whole and a lower sealing bar connected to the lower fixing portion,
the movement unit is substantially configured to adjust a distance between the upper sealing bar and the lower sealing bar, and
the distance measurement unit is substantially configured to measure the distance between the upper sealing bar and the lower sealing bar.

3. The battery cell sealing apparatus according to claim 1, wherein the movement unit comprises:
two movement shafts connected to a top of the upper sealing unit near opposite edges of the upper sealing unit in a longitudinal direction, respectively; and
a servomotor configured to control a position of each of the two movement shafts.

4. The battery cell sealing apparatus according to claim 2, wherein the movement unit comprises:
a movement shaft connected to a center of the upper fixing portion;
a driving motor configured to move the movement shaft upward and downward; and
a servomotor configured to adjust a connection distance between ends of the upper fixing portion and the upper sealing bar at each of opposite sides thereof in a longitudinal direction.

5. The battery cell sealing apparatus according to claim 4, wherein the servomotor is configured to adjust a distance between a middle of the upper fixing portion and a middle of the upper sealing bar in a width direction at each of the ends of the upper fixing portion and the upper sealing bar at each of the opposite sides thereof in the longitudinal direction.

6. The battery cell sealing apparatus according to claim 4, wherein the servomotor is configured to adjust a distance between opposite sides of the upper fixing portion and the upper sealing bar in a width direction at each of the ends of the upper fixing portion and the upper sealing bar at each of the opposite sides thereof in the longitudinal direction.

7. The battery cell sealing apparatus according to claim 6, wherein the distance measurement unit and the movement guide unit are disposed at both a front and a rear of the sealing unit.

8. The battery cell sealing apparatus according to claim 1, wherein the movement guide unit comprises a first movement guide unit formed in a direction perpendicular to a longitudinal direction of the sealing unit and a second movement guide unit formed in a direction parallel to the longitudinal direction of the sealing unit.

9. The battery cell sealing apparatus according to claim 8, wherein
the distance measurement unit is fixed to the first movement guide unit or the second movement guide unit, and
the first movement guide unit or second movement guide unit having the distance measurement unit fixed thereto is fixed to the first movement guide unit or second movement guide unit having no distance measurement unit fixed thereto.

10. The battery cell sealing apparatus according to claim 1, wherein the movement unit is connected to a controller configured to perform a control according to a result of a measurement of the distance measurement unit.

11. A battery cell sealing method using the battery cell sealing apparatus according to any one of claims 1 to 10, the battery cell sealing method comprising:
a first step comprising changing a distance between the upper sealing unit and the lower sealing unit from a state in which a battery cell is not present to a state in which the battery cell is sealed;
a second step comprising locating the distance measurement unit at a position adjacent to the sealing unit through the movement guide unit;
a third step comprising measuring the distance between the upper sealing unit and the lower sealing unit through the distance measurement unit; and
a fourth step comprising sealing the battery cell by reflecting a result of measurement of the distance between the upper sealing unit and the lower sealing unit for control of the movement unit.

12. The battery cell sealing method according to claim 11, wherein the first step and the second step are performed in reverse order or are performed simultaneously.

13. The battery cell sealing method according to claim 11, further comprising a step of moving the distance measurement unit so the distance measurement unit is spaced apart from the sealing unit between the third step and the fourth step.
